# EUROPEAN PATENT SPECIFICATION

(11) **EP 4 396 423 B1**
(45) Date of publication and mention of the grant of the patent: **05.03.2025**
(21) Application number: 21777948.7
(22) Date of filing: 30.08.2021
(51) Int. Cl.: E04F 11/18, F16B 19/05, F16B 7/00

(54) **A RAILING SYSTEM, A METHOD FOR ASSEMBLING A RAILING SYSTEM AND USE OF A RAILING SYSTEM**
GELÄNDERSYSTEM, VERFAHREN ZUR MONTAGE EINES GELÄNDERSYSTEMS UND VERWENDUNG EINES GELÄNDERSYSTEMS
SYSTÈME DE GARDE-CORPS, SON PROCÉDÉ D'ASSEMBLAGE ET SON UTILISATION

(43) Date of publication of application: 10.07.2024
(73) Proprietor: Weissenborn A/S, 7100 Vejle (DK)
(72) Inventor: MØLLER, Peter, 6640 Lunderskov (DK)
(74) Representative: Patentgruppen A/S
(86) International application number: PCT/DK2021/050263
(87) International publication number: WO 2023/030596

(56) References cited:
- FR-A1- 2 720 382
- JP-A- H10 252 026
- US-A- 4 983 085
- DVORAK PAUL: "No torque required for this fastener", 31 July 2012 (2012-07-31), XP055918606, Retrieved from the Internet <URL:https://www.windpowerengineering.com/no-torque-required-for-this-fastener/> [retrieved on 20220506]

## Description

### Field of the invention

The invention relates to a railing system for an offshore installation, wherein the railing system comprises two or more balusters and at least one rail. The invention also relates to a method for assembling a railing system on an offshore installation and use of a winch system.

### Background of the invention

Particularly regarding offshore installations such as oil rigs, offshore wind turbines, wave energy plants and other it is important that all platforms, decks, gangways etc. are provided with railing to prevent personnel from falling off the installation and to provide something to hold on to when moving around in bad weather.

It is therefore known to assemble a railing by means of welding onshore in that thorough quality inspection of the welding has to be performed before installation. After inspection the railing sections are transported to the offshore installation where it is connected to the installation. However, it is space consuming - and thereby expensive - to transport prefabricated railing sections and if it does not fit it is very troublesome and expensive to correct any mistakes.

Thus, from the European patent application EP 2116676 A1 it is known to form a railing by means of grooved tubular metallic profiles connected by means of a crosshead assembly placed in the grooves of the two profiles. However, this solution is complex and expensive and vulnerable to galvanic corrosion which is a big problem with offshore installations due to the saltwater surrounding. Furthermore, railing on offshore installations is exposed to much more vibrations than onshore railing due to the effects of both wind, waves, and typically large vibration inducing machinery - such as wind turbines - and the solution disclosed in EP 2116676 A1 is at high risk of loosening itself or even disassemble due to vibrations.

From the Japanese patent application JP H10 252026 A a railing system is known in which horizontal bars are connected to balusters by means of stainless-steel nuts and bolts. However, this system is expensive and vulnerable to vibrations.

An object of the invention is therefore to provide for an advantageous technique for forming a railing system for an offshore installation.

### The invention

The invention provides for a railing system for an offshore installation. The railing system comprises two or more balusters including connection means for connecting the balusters to the offshore installation and at least one rail comprising two or more longitudinal rail sides, wherein at least one of the two or more longitudinal rail sides is a T-slot side comprising at least one T-slot. The railing system also comprises at least two fixation devices arranged to connect the at least one rail to the two or more balusters so that the T-slot side of the rail is forced against a first side of the balusters, wherein each of the at least two fixation devices comprises bolt means including a pin part and a head part, wherein the head part is arranged at one end of the pin part, wherein the head part is arranged in the at least one T-slot and the pin part is extending through an orifice in the baluster, wherein the fixation device further comprise a collar encircling the pin part on a second side of the balusters, wherein the first side is opposite the second side, wherein the collar is connected to the pin part by means of a compression joint, and wherein the two or more balusters, the at least one rail and the at least two fixation devices are made of aluminium.

Assembling the railing by means of fixation devices is advantageous in that this enables that welding can be avoided which in turn means that the railing parts can be transported disassembled to the erection site - thereby reducing transportation cost.

Furthermore, it is easy to e.g. change the distance between balusters on site, which would be virtually impossible with a pre-welded railing. Also, connecting the collar and the pin part of the fixation devices by means of a compression joint is advantageous in that by compressing the collar around the pin part the assembly process cannot be reversed and the fixation devices will therefore not disassemble over time due to vibrations. And by forming all the railing parts of aluminium any risk of galvanic corrosion is avoided. Furthermore, aluminium is easy to handle and transport, it is easy to machine and work with in general on site and it does not need surface coating to be durable offshore which makes it ideal for railing systems on offshore installations.

It should be noted that in this context the term *"connection means"* is to be understood as any kind of connector or part of a connector suited for connecting the balusters to the offshore installation. Thus, in this context the term includes any kind of bolt holes or holes for other devices suited for the purpose, any kind of clamps, any kind of treaded pins, hooks or other.

It should also be noted that in this context the term *"bolt means"* is to be understood as any kind of threadless bolt having a pin part with a head part arranged at one end of the pin part, wherein the head part has a larger diameter or cross-sectional extent than the pin part as seen in the longitudinal direction of the bolt means. Thus, in this context the term includes any kind of pin with a larger head a one end of the pin, any kind of nail like device, any kind of rod being larger at one end or other.

Furthermore, it should be noted that in this context the term *"compression joint"* is to be understood as any kind of connection formed by one part of the compression joint being compressed so that it permanently deforms and connects to another part of the compression joint through interlocking geometry or friction. I.e. a compression joint is an irreversible joint type in which the joint parts can only be separated again by destroying at least one of the joint parts. I.e. in this context the collar is compressed around the pin part so that the collar is permanently deformed and squeezes around the pin part to lock the collar against displacement in relation to the pin part and so that the collar can only be removed again by sawing the collar of or pulling the collar of by used of extensive force - thus, destroying the collar and/or the pin part.

The at least one T-slot can extend the entire length of the at least one rail.

Forming the T-slot so that it is extending the entire length of the rail is advantageous in that it makes the system more versatile, it enables that the bolt means may be slid into the T-slot from both ends of the rail and in that it enables that the rail may be manufactured by extrusion, which is inexpensive and efficient.

In an aspect of the invention, the at least one T-slot is arranged in a first longitudinal rail side of the two or more longitudinal rail sides and wherein an additional T-slot is arranged in a second longitudinal rail side of the two or more longitudinal rail sides.

Forming the rail with an additional T-slot is advantageous in that additional features, fitting, equipment and other hereby easily can be connected to the rail in a simple and versatile manner.

Illumination means can be arranged in the additional T-slot.

Railing on an offshore installation is almost always placed at the outer edge of a platform or the like and it is therefore very dangerous if personnel somehow pass the railing by mistake. It is therefore advantageous to arrange illumination means in the additional T-slot both to guide the personnel to the railing to provide something secure to hold on to in rough weather and to light up the at least the periphery of the platform. Furthermore, placing the illumination means in the additional T-slot is advantageous in that this prevents straps, clothes or other from getting caught on the illumination means and the illumination means is better protected.

It should be noted that in this context the term *"illumination means"* is to be understood as any kind of light or illuminator. Thus, in this context the term includes any kind of lamp, spot, light emitting diode, incandescent bulb, halogen or other or any combination thereof or any other kind of light emitter.

In an aspect of the invention, the first longitudinal rail side is neighbouring the second longitudinal rail side.

The first longitudinal rail side includes the T-slot and therefore faces the baluster. By making the second longitudinal rail side bordering on the first longitudinal rail side - e.g. so that the second longitudinal rail side is substantially perpendicular to the first longitudinal rail side - it is easier to retrofit additional features, fitting, equipment and other in the additional T-slot and to e.g. make illumination means arranged in the additional T-slot illuminate below and in front of the railing.

The additional T-slot can extend the entire length of the at least one rail.

Forming the additional T-slot so that it is extending the entire length of the rail is advantageous in that it makes the system more versatile, it enables that the bolt means, fittings, equipment, connectors or other may be slid into the additional T-slot from both ends of the rail and in that it enables that the rail may be manufactured by extrusion, which is inexpensive and efficient.

In an aspect of the invention, the pin part is cylindrical and wherein a cylindrical surface of the pin part comprises a number of indentations.

Forming the cylindrical surface of the pin part with indentations is advantageous in that when the compression joint is formed by compressing the collar around the pin part, the collar will deform into the indentations and thereby form interlocking geometry when viewed in the longitudinal direction of the pin.

In an aspect of the invention, the indentations are formed between a number of radial circular prostitutions along the lengthwise extent of the pin part.

Forming the indentations as the valleys formed between radial circular prostitutions along the lengthwise - i.e. longitudinal - extent of the pin part is advantageous in that this ensures a strong hold when the compression joint is formed, and it ensures an evenly distributed hold all around the pin part.

In an aspect of the invention, the pin part has a corrugated surface forming a number of ridges and valleys along the lengthwise extent of the pin part.

Forming the indentations as the valleys of a corrugated surface is advantageous in that this ensures a strong hold when the compression joint is formed, and it ensures an evenly distributed hold all around the pin part.

It should be noted that in this context the term *"along the lengthwise extent of the pin part"* is to be understood as at least a part of the lengthwise extent of the pin part. I.e. the radial circular prostitutions and/or the corrugated surface does not have to extend the entire lengthwise extent of the pin part.

The compression joint can include the collar protruding into the indentations.

Forming the compression joint so that parts of the collar is protruding into the indentations is advantageous in that this will form interlocking geometry that will provide a very strong hold that is unaffected by vibration.

In an aspect of the invention, the connection means are arranged at a first longitudinal baluster end of the two or more balusters.

Forming the connection means at one end of each of the balusters is advantageous in that reduces material use and ensures that the balusters can be connected so that they project upwards e.g. perpendicular to the upper surface of the offshore installation to which they are attached.

In an aspect of the invention, the at least one rail comprises a handrail arranged at a second longitudinal baluster end of the two or more balusters, wherein the second longitudinal baluster end is opposite the first longitudinal baluster end. And the railing system further comprises a mid-rail connected to the two or more balusters between the connection means and the handrail by means of at least two fixation devices of the at least two fixation devices.

Placing the handrail at the top of the balusters is advantageous in that it makes it easier to reach and use the handrail and it reduces the risk of straps, clothes or other being caught on protruding upper ends of the balusters.

Providing a mid-rail between the connection means and the handrail is advantageous in that this will enable that the handrail may be arranged at a suitable hight without risking personal falling of the offshore installation by falling under the handrail. And connecting the mid-rail to the balusters by means of fixation devices is advantageous in that this enables that welding can be avoided, it is easy to e.g. change the distance between balusters on site and using fixation devices forming connections by means of compression joints is advantageous in that by compressing the collar around the pin part the assembly process cannot be reversed and the fixation devices will therefore not disassemble over time due to vibrations.

The handrail and the mid-rail can be parallel.

Forming the handrail and the mid-rail parallel is advantageous in that it makes it easier to comply with rules and regulations regarding railing design offshore and it makes it easier to connect fittings, equipment, posts and other to both the handrail and the mid-rail.

In an aspect of the invention, the railing system further comprises
a first end cover covering the first longitudinal rail ends of the handrail and the mid-rail, wherein the first end cover is also extending between the first longitudinal rail ends of the handrail and the mid-rail, and
a second end cover covering the second longitudinal rail ends of the handrail and the mid-rail, wherein the second end cover is also extending between the second longitudinal rail ends of the handrail and the mid-rail.

Covering the open ends of the handrail and the mid-rail is advantageous in that this will reduce the risk of ingress of water, dirt and other which over time could lead to deterioration of the rails or lead to hygiene problems. And by making the end covers extend between the handrail and the mid-rail at each end the risk of straps, clothes or other being caught on the free ends is reduced.

In an aspect of the invention, the at least one rail is connected to the two or more balusters so that the longitudinal extent of the at least one rail is substantially perpendicular to the longitudinal extent of the two or more balusters.

Making the rail or rails extend substantially perpendicular to the longitudinal extent of the balusters is advantageous in that this enables a less complex railing design and reduces the length and thereby the cost of the balusters.

In an aspect of the invention, the compression joint comprises the collar and the pin part having interlocking geometry interlocking the collar and the pin part against displacement in the longitudinal direction of the pin part.

Making the collar permanently deform into holes, grooves, slits or other in the pin part to form interlocking geometry between the collar and the pin part when the compression joint is formed by compressing the collar around the pin part is advantageous in that interlocking geometry forms a very durable and secure connection which is unaffected by vibrations and other.

The invention also provides for a method for assembling a railing system according to any of the previously discussed railing systems on an offshore installation, the method comprising the steps of:
- connecting two or more aluminium balusters to the offshore installation,
- placing a head part of first aluminium bolt means and second aluminium bolt means in a T-slot arranged in a T-slot side of an aluminium rail, wherein the rail comprises two or more longitudinal rail sides of which one is the T-slot side, wherein each of the first and second bolt means comprise a pin part and a head part, wherein the head part is arranged at one end of the pin part,
- placing the T-slot side of the rail against a first side of the baluster so that the pin part of the first bolt means is extending through an orifice in a first baluster of the two or more balusters and so that the pin part of the second bolt means is extending through an orifice in a second baluster of the two or more balusters,
- placing a first collar on the pin part of the first bolt means on a second side of the first baluster so that the first collar encircles the pin part of the first bolt means and placing a second collar on the second bolt means on a second side of the second baluster so that the second collar encircles the pin part of the second bolt means, wherein the first side is opposite the second side, and
- connecting the first collar to the pin part of the first bolt means and connecting the second collar to the second bolt means by means of a compression joint formed by squeezing the first collar against the pin part of the first bolt means and squeezing the second collar against the pin part of the second bolt means.

Assembling the railing system on site is advantageous in that it simplifies and reduces cost of transportation. And connecting the rails to the balusters by means bolt means in T-slots in the rails ensures a flexible and versatile assembly method. Furthermore, by connecting the collar to the pin part of the bolt means by means of a compression joint is advantageous in that it is a fast and efficient way of connecting the rail to the balusters that will ensure that the connection is not loosened or undone by vibrations. And making all the parts in aluminium is advantageous in that the risk of galvanic corrosion is reduced.

In an aspect of the invention, the pin part of the first and second bolt means is pulled in a direction away from the second side and the first and second collar is pushed against the second side while the compression joint is formed.

Pulling the pin part away from the baluster while pushing the collar against the baluster when the compression joint is formed by squeezing the collar firmly and tightly around the pin part is advantageous in that this will ensure that the rail is held firmly against the baluster after the compression joint is formed.

In an aspect of the invention, squeezing the first collar against the pin part of the first bolt means causes the first collar to deform radially into indentations in the pin part of the first bolt means and wherein squeezing the second collar against the pin part of the second bolt means causes the second collar to deform radially into indentations in the pin part of the second bolt means.

Squeezing the collar so that it deforms into indentations in the pin part when forming the compression joint is advantageous in that this will ensure that the collar and the pin part forms interlocking overlapping geometry that will form a strong joint that will stay unaffected substantially no matter how hard the offshore installation and/or the railing vibrates.

In an aspect of the invention, the method further comprises sliding the first and second bolt means to positions in the T-slot where the distance between the first and second bolt means is the same as the distance between the first and second baluster of the two or more balusters after placing the head part of first and second aluminium bolt means in the T-slot.

Sliding the bolt means into correct position in the T-slot before attaching the rail to the balusters will simplify the assembly process.

The method can be performed by means of a railing system according to any of the previously discussed railing systems.

Hereby is achieved an advantageous embodiment of the invention.

Furthermore, the invention provides for use of a railing system according to any of the previously discussed railing systems on a transition piece arranged between a foundation and a tower of an offshore wind turbine.

Almost all modern offshore wind turbines comprise a transition piece arranged between the foundation - such as a monopile, tripod, jacket or similar foundation - and the wind turbine tower. Such transitions pieces are located just above sea level and therefore exposed to seawater, waves, rough weather and on top of that significant vibrations from the wind turbine. It is therefore particularly advantageous to use a railing system according to the present invention on such a transition piece.

### Figures

An embodiment of the invention will be described, by way of non-limiting example, in the following with reference to the figures in which:
- fig. 1: illustrates an offshore wind turbine comprising a railing system, as seen in perspective,
- fig. 2: illustrates a section of a railing system, as seen in perspective,
- fig. 3: illustrates a section of a railing system, as seen from the front,
- fig. 4: illustrates a rail, as seen from the side, and
- fig. 5: illustrates a cross section of a rail 1 connected to a baluster through a fixation device, as seen from the side.

### Detailed description

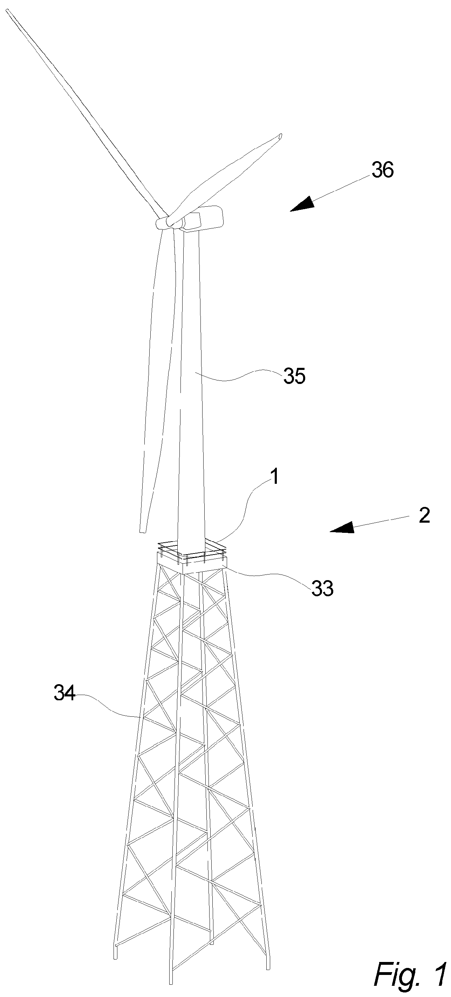

Fig. 1 illustrates an offshore wind turbine 36 comprising a railing system 1, as seen in perspective.

In this embodiment the railing system 1 is arranged on an offshore installation 2 in the form of a transition piece 33 located between a foundation 34 - in this case a jacket foundation - and the tower 35 of an offshore wind turbine 36. I.e., in this embodiment the railing system 1 is arranged along the outer periphery of the upper platform formed on the upper surface of the transition piece 33. The transition piece 33 is usually located just above sea level and can therefore be hit by waves in rough weather. In this embodiment the transition piece 33 is shown very simplified and usually the transition piece 33 can also comprises stairs, boat landings, helipads, additional platforms or other that could comprise railing system 1 according to the present invention.

In another embodiment the railing system 1 could be mounted on an oil rig, an offshore energy conversion plant, an offshore oil refinery or another type of offshore installation 2.

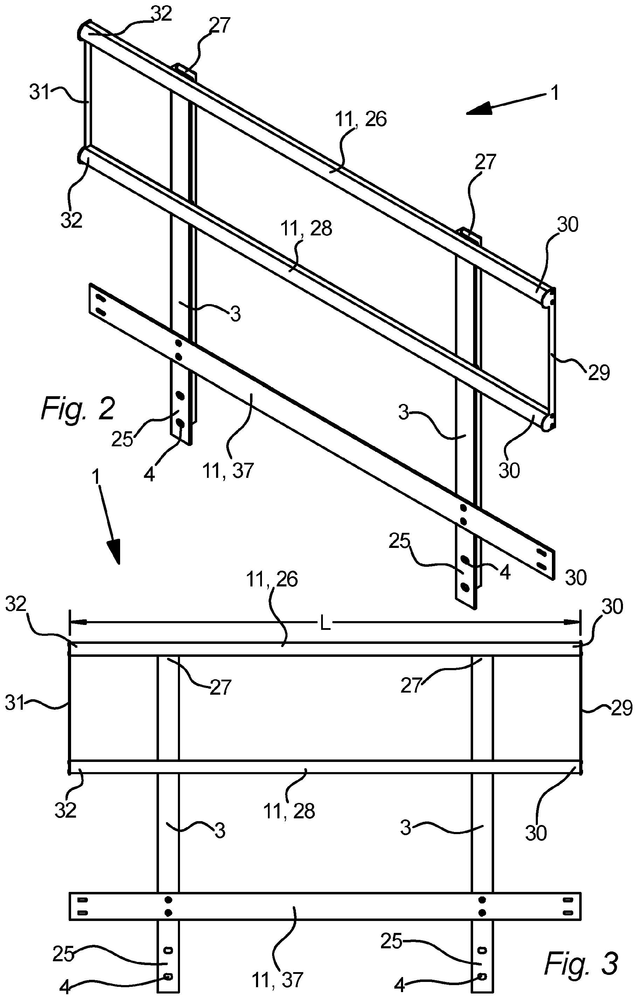

Fig. 2 illustrates a section of a railing system 1, as seen from in perspective and fig. 3 illustrates a section of a railing system 1, as seen from the front.

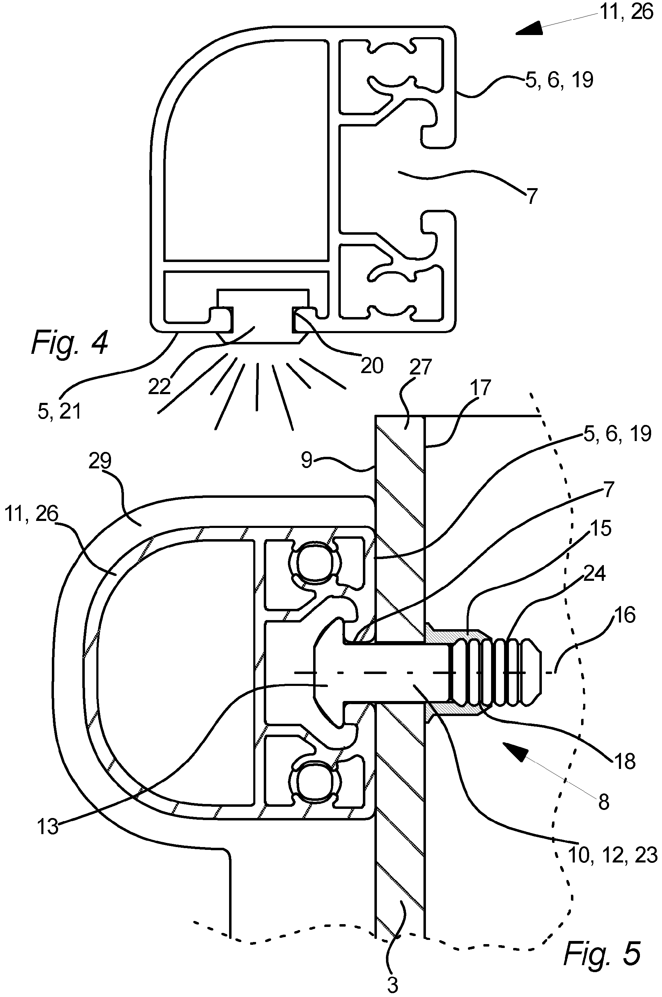

In this embodiment the railing system 1 comprises two balusters 3 - i.e., two vertical or substantially vertical posts, poles or supports - to which three rails 11 has been connected. In this embodiment the rails 11 comprises an upper handrail 26 arranged at an upper end of the baluster 3 - i.e. a second longitudinal baluster end 27 -, a lower kickplate 37 (also called a kick rail) arranged near the lower end of the baluster 3 - i.e., a first longitudinal baluster end 25 -, and a mid-rial 28 arranged between the upper handrail 26 and the lower kickplate 37. In another embodiment the railing system 1 could comprise further rails 11 - such as four, five, six or even more rails 11 - or the railing system 1 could comprise fewer rails 11 such as only the handrail 26 and the mid-rial 28 or kickplate 37 or only the handrail 26. In another embodiment the railing system 1 could comprise three, four, six or even more balusters 3 and/or some rails 11 could be connected to only some of the balusters 3. In this embodiment all the rails 11 and all the balusters 3 are made fully of aluminum but in another embodiment a additional surface coating - such as a rubber coating, surface paint or other could be provided to one or more of the railing system parts 3, 8 (see fig. 5), 11.

In this embodiment the balusters 3 each comprise connection means 4 in the form of through holes by means of which the first longitudinal baluster end 25 can be connected to an outside vertical surface of the offshore installation 2 by use of bolts or the like. However, in another embodiment the connection means 4 could also or instead include a foot plate for connecting the balusters 2 to a horizontal surface, the connection means 4 could also or instead include threaded holes, threaded studs, claps or other.

In this embodiment the balusters 3 are made from an angle aluminium profile but in another embodiment the balusters 3 could be made from pipes, rods, T-profiles, slotted profiles or other.

In this embodiment the handrail 26, the mid-rail 28 and the kickplate 37 are parallel and mounted so that the longitudinal extent of the rails 11, 26, 28, 37 are substantially perpendicular to the longitudinal extent of the balusters 3. However, in another embodiment two or more of the rails 11 would not be parallel and/or one or more of the rails 11 would not be perpendicular to the balusters 3 - e.g. when the railing system 1 is used as a stair railing.

In this embodiment the railing system 1 further comprises a first end cover 29 covering the first longitudinal rail ends 30 of the handrail 26 and the mid-rail 28 and a second end cover 31 covering the second longitudinal rail ends 32 of the handrail 26 and the mid-rail 28. In this embodiment the first end cover 29 and the second end cover 31 also extend vertically between the rail ends 30, 32 but in another embodiment each rail end 30, 32 could comprise individual end covers 29, 31 - i.e. in another embodiment the railing system 1 could comprise four end covers 29, 31. In this embodiment the end covers 29, 31 are connected to the rails 26, 28 by means of screws but in another embodiment the end covers 29, 31 could be connected to the rails 26, 28 by means of bolts, rivets, adhesive, welding or other.

In this embodiment the rails 11 are connected to the balusters 3 by means of fixation devices (not shown) which will be discussed in more details in relation to fig. 5.

In this embodiment the railing system 1 has been preassembled on site and is now ready to be attached to the offshore installation 2. However, in a more common embodiment the first longitudinal baluster end 25 of each of the two balusters 3 is first connected to the offshore installation 2 after which the rails 11, 26, 28, 37 are connected to the balusters 3 by means of fixation devices (not shown) which will be discussed in more details in relation to fig. 5. In this embodiment the last step is to connect the transverse end covers 29, 31 to the rail ends 30 of the handrail 26 and the mid-rail 28.

Fig. 4 illustrates a rail 11, as seen from the side.

In this embodiment the rail 11 is a handrail 26 comprising a T-slot 7 on the side for connecting the rail 11 to the baluster 3. A T-slot 7 is - as can be seen - a groove or a slit that is narrowest at the mouth so that a device with a head that is wider that a pin part protruding from the head can be retained in the T-slot 7 - with the pin part protruding out of the T-slot 7 - but may still be displaced in the longitudinal direction of the slot. A T-slot 7 is also sometimes referred to as a dovetail track, a connection slot, a profile slot and other.

In this embodiment the T-slot 7 is arranged in a first longitudinal rail side 19 - i.e. the T-slot side 6 - of the longitudinal rail sides 5 of the rail 11 and in this embodiment the rail 11 is also provided with an additional T-slot 20 arranged in a second neighbouring longitudinal rail side 21 of the longitudinal rail sides 5. However, in another embodiment the rail 11 would only comprise a single T-slot or the rail 11 could comprise more than two T-slots 7, 20 and/or the T-slots 7, 20 could be arranged in the same longitudinal rail side 5 or in other longitudinal rail sides 5.

In this embodiment the rail 11 is an extruded aluminium profile but in another embodiment the rail could be formed by machining a tube or a rod, by connecting more than one tubes and/or profiles, or other.

In this embodiment the T-slot 7 and the additional T-slot 20 are extending the entire length L (see fig. 3) of the rail 11 but in another embodiment the T-slot 7 and/or the additional T-slot 20 would only extend parts of the length L (see fig. 3) of the rail 11 - i.e. in another embodiment the T-slot 7, 20 would only extend longitudinal around the area where they are used.

In this embodiment illumination means 22 - in this case in the form of a LED strip lamp - are arranged in the additional T-slot 20. In this embodiment the illumination means 22 are extending substantially the entire length L (see fig. 3) of the rail 11 but in another embodiment the illumination means 22 would be formed as individual lights placed around in appropriate places in the additional T-slot. In another embodiment the illumination means 22 could also or instead be located in the T-slot 7 and/or other surfaces of the rail 11. Furthermore, in another embodiment additional equipment such as signs, poles, screens, struts, hinges, fittings, or other could be connected to the railing system 1 by means of the T-slot 7 and/or the additional T-slots 20.

Fig. 5 illustrates cross section of a rail 1 connected to a baluster 3 through a fixation device 8, as seen from the side.

In this embodiment the fixation device 8 comprises bolt means 10 having a wider head part 13, wherein the head part 13 is arranged at one end of a narrower elongated pin part 12. In this embodiment the pin part 12 is cylindrical and the cylindrical surface 23 of the pin part 12 is provided with a number of indentations 24 formed in the valleys between a number of radial circular prostitutions along a part of the lengthwise extent of the pin part 12. However, in another embodiment the indentations 24 could be formed as surface dimples, at holes in the cylindrical surface 23, as surface barbs or other and/or the indentations 24 could be formed throughout the entire lengthwise extent of the pin part 12.

In this embodiment the fixation device 8 comprises a collar 15 encircling the pin part and connected to the pin part 12 by means of a compression joint 18 which in this case is formed by a tool which at the same time will pull the pin part 12 and push the collar 15 and then subsequently squeeze the collar 15 around the pin part 12 so that the collar 15 is permanently deformed into the indentations 24 of the pin part 12. Thus, in this embodiment the diameter of the centre hole in the collar 15 is bigger than the maximum outer diameter of the pin part 12 before the compression joint 18 is formed so that the collar 15 may easily be slid onto the pin part 12. After the compression joint 18 is formed the minimum inner diameter of the centre hole in the collar is smaller than the maximum outer diameter of the pin part 12 so that the material of the collar 15 is overlapping the material of the pin part 12 to geometrically interlock the collar 15 and the pin part 12 as seen in a direction parallel to the centre axis 16 (or rotational axis) of the collar 15 and the pin part 12 - i.e. if the collar 15 and/or the pin part 12 are rotational symmetrical (which they are in a preferred embodiment) the centre axis 16 will coincide with the axis of symmetry. However, in another embodiment the compression joint 18 would only squeeze the collar 15 around the pin part 12 to lock the collar 15 to the pin part 12 by means of friction.

Also, in another embodiment the compression joint 18 could be formed in a separate process once the collar 15 is in place.

Thus, in this embodiment the railing system 1 is formed by first connecting the two balusters 3 to the offshore installation 2 as previously discussed after which the rails 11, 26, 28, 37 are connected to the balusters 3 by means of fixation devices 8 in the following way:
First the head part 13 of the bolt means 10 are slid into the T-slot 7 in the rail 11, after which the T-slot side 6 of the rail 11 is held against a first side 9 of the baluster 3 so that the pin part 12 of the bolt means 10 is extending through an orifice 14 in the baluster 3. A collar 15 is than placed on the pin part 12 of the bolt means 10 on a second side 17 of the baluster 3 so that the collar 15 encircles the pin part 12. Note that the first side 9 of the baluster 3 is opposite the second side 17 so that the rail 11 and the collar 15 are placed on opposite sides of the baluster 3. The first collar 15 is then connected to the pin part 12 by means of a compression joint 18 formed by squeezing the collar 15 against the pin part 12. Obviously, the method involves connecting the rail 11 or all the rails 11, 26, 28 to each of the balusters 3 of the specific railing system 1 by means of fixation devices 8 as described in the above.

In this embodiment the balusters 3, the rail(s) 11, the fixation devices 8 of the railing system 1 are all made of aluminium. In this way galvanic corrosion is avoided in a simple way and assembly of the railing system can be made much faster since galvanic isolation through isolating washers, inserts, spacers and other can be avoided. However, in another embodiment further parts could be connected to or applied to the railing system 1 and these parts are not necessarily made of aluminium.

The invention has been exemplified above with reference to specific examples of balusters 3, rails 11, fixation devices 8 and other. However, it should be understood that the invention is not limited to the particular examples described above but may be designed and altered in a multitude of varieties within the scope of the invention as specified in the appended claims.

### List

- 1.: Railing system
- 2.: Offshore installation
- 3.: Baluster
- 4.: Connection means
- 5.: Longitudinal rail side
- 6.: T-slot side
- 7.: T-slot
- 8.: Fixation devices
- 9.: First side of baluster
- 10.: Bolt means
- 11.: Rail
- 12.: Pin part
- 13.: Head part
- 14.: Orifice
- 15.: Collar
- 16.: Centre axis of collar and pin part
- 17.: Second side of baluster
- 18.: Compression joint
- 19.: First longitudinal rail side
- 20.: Additional T-slot
- 21.: Second longitudinal rail side
- 22.: Illumination means
- 23.: Cylindrical surface of pin part
- 24.: Indentation
- 25.: First longitudinal baluster end
- 26.: Handrail
- 27.: Second longitudinal baluster end
- 28.: Mid-rail
- 29.: First end cover
- 30.: First longitudinal rail ends
- 31.: Second end cover
- 32.: Second longitudinal rail end
- 33.: Transition piece
- 34.: Foundation
- 35.: Wind turbine tower
- 36.: Offshore wind turbine
- 37.: Kickplate
- L.: Length of rail

## Claims

1. A railing system (1) for an offshore installation (2), said railing system (1) comprises two or more balusters (3) comprising connection means (4) for connecting said balusters (3) to said offshore installation (2),
at least one rail (11) comprising two or more longitudinal rail sides (5), wherein at least one of said two or more longitudinal rail sides (5) is a T-slot side (6) comprising at least one T-slot (7),
at least two fixation devices (8) arranged to connect said at least one rail (11) to said two or more balusters (3) so that said T-slot side (6) of said rail (11) is forced against a first side (9) of said balusters (3), wherein each of said at least two fixation devices (8) comprises bolt means (10) including a pin part (12) and a head part (13), wherein said head part (13) is arranged at one end of said pin part (12), wherein said head part (13) is arranged in said at least one T-slot (7) and said pin part (12) is extending through an orifice (14) in said baluster (3), wherein said fixation device (8) further comprise a collar (15) encircling said pin part (12) on a second side (17) of said balusters (3), wherein said first side (9) is opposite said second side (17), wherein said collar (15) is connected to said pin part (12) by means of a compression joint (18), and
wherein said two or more balusters (3), said at least one rail (11) and said at least two fixation devices (8) are made of aluminium.

2. A railing system (1) according to claim 1, wherein said at least one T-slot (7) is arranged in a first longitudinal rail side (19) of said two or more longitudinal rail sides (5) and wherein an additional T-slot (20) is arranged in a second longitudinal rail side (21) of said two or more longitudinal rail sides (5).

3. A railing system (1) according to claim 2, wherein said first longitudinal rail side (19) is neighbouring said second longitudinal rail side (21).

4. A railing system (1) according to any of the preceding claims, wherein said pin part (12) is cylindrical and wherein a cylindrical surface (23) of said pin part (12) comprises a number of indentations (24).

5. A railing system (1) according to claim 4, wherein said indentations (24) are formed between a number of radial circular prostitutions along the lengthwise extent of said pin part (12).

6. A railing system (1) according to any of the preceding claims, wherein said connection means (4) are arranged at a first longitudinal baluster end (25) of each of said two or more balusters (3).

7. A railing system (1) according to claim 6, wherein said at least one rail (11) comprises a handrail (26) arranged at a second longitudinal baluster end (27) of said two or more balusters (3), wherein said second longitudinal baluster end (27) is opposite said first longitudinal baluster end (25), wherein said railing system (1) further comprises a mid-rail (28) connected to said two or more balusters (3) between said connection means (4) and said handrail (26) by means of at least two fixation devices (8) of said at least two fixation devices (8).

8. A railing system (1) according to claim 7, wherein said railing system (1) further comprises
a first end cover (29) covering the first longitudinal rail ends (30) of said handrail (26) and said mid-rail (28), wherein said first end cover (29) is also extending between said first longitudinal rail ends (30) of said handrail (26) and said mid-rail (28), and
a second end cover (31) covering the second longitudinal rail ends (32) of said handrail (26) and said mid-rail (28), wherein said second end cover (31) is also extending between said second longitudinal rail ends (32) of said handrail (26) and said mid-rail (28).

9. A railing system (1) according to any of the preceding claims, wherein said at least one rail (11) is connected to said two or more balusters (3) so that the longitudinal extent of said at least one rail (11) is substantially perpendicular to the longitudinal extent of said two or more balusters (3).

10. A railing system (1) according to any of the preceding claims, wherein said compression joint (18) comprises said collar (15) and said pin part (12) having interlocking geometry interlocking said collar (15) and said pin part (12) against displacement in the longitudinal direction of said pin part (12).

11. A method for assembling a railing system (1) according to any of the preceding claims on an offshore installation (2), said method comprising the steps of:
• connecting two or more aluminium balusters (3) to said offshore installation (2),
• placing a head part (13) of first aluminium bolt means (10) and second aluminium bolt means (10) in a T-slot (7) arranged in a T-slot side (6) of an aluminium rail (11), wherein said rail (11) comprises two or more longitudinal rail sides (5) of which one is said T-slot side (6), wherein each of said first and second bolt means (10) comprise a pin part (12) and a head part (13), wherein said head part (13) is arranged at one end of said pin part (12),
• placing said T-slot side (6) of said rail (11) against a first side (9) of said balusters (3) so that said pin part (12) of said first bolt means (10) is extending through an orifice (14) in a first baluster of said two or more balusters (3) and so that said pin part (12) of said second bolt means (10) is extending through an orifice (14) in a second baluster of said two or more balusters (3),
• placing a first collar (15) on said pin part (12) of said first bolt means (10) on a second side (17) of said first baluster so that said first collar (15) encircles said pin part (12) of said first bolt means (10) and placing a second collar (15) on said second bolt means (10) on a second side (17) of said second baluster so that said second collar (15) encircles said pin part (12) of said second bolt means (10), wherein said first side (9) is opposite said second side (17), and
• connecting said first collar (15) to said pin part (12) of said first bolt means (10) and connecting said second collar (15) to said second bolt means (10) by means of a compression joint (18) formed by squeezing said first collar (15) against said pin part (12) of said first bolt means (10) and squeezing said second collar (15) against said pin part (12) of said second bolt means (10).

12. A method according to claim 11, wherein said pin part (12) of said first and second bolt means (10) is pulled in a direction away from said second side (17) and said first and second collar (15) is pushed against said second side (17) while said compression joint (18) is formed.

13. A method according to claim 11 or 12, wherein squeezing said first collar (15) against said pin part (12) of said first bolt means (10) causes said first collar (15) to deform radially into indentations (24) in said pin part (12) of said first bolt means (10) and wherein squeezing said second collar (15) against said pin part (12) of said second bolt means (10) causes said second collar (15) to deform radially into indentations (24) in said pin part (12) of said second bolt means (10).

14. A method according to any of claims 11-13, wherein said method further comprises sliding said first and second bolt means (10) to positions in said T-slot (7) where the distance between said first and second bolt means (10) is the same as the distance between said first and second baluster of said two or more balusters (3) after placing said head part (13) of first and second aluminium bolt means (10) in said T-slot (7).

15. Use of a railing system (1) according to any of claims 1-10 on a transition piece (33) arranged between a foundation (34) and a tower (35) of an offshore wind turbine (36).

## Patentansprüche

1. Geländersystem (1) für eine Offshore-Anlage (2), wobei das Geländersystem (1) umfasst:
zwei oder mehr Baluster (3), umfassend Verbindungsmittel (4) zum Verbinden der Baluster (3) mit der Offshore-Anlage (2),
mindestens eine Schiene (11), umfassend zwei oder mehr Schienenlängsseiten (5), wobei mindestens eine der zwei oder mehr Schienenlängsseiten (5) eine T-Nutseite (6) ist, umfassend mindestens eine T-Nut (7),
mindestens zwei Befestigungsvorrichtungen (8), die angeordnet sind, um die mindestens eine Schiene (11) mit den zwei oder mehr Balustern (3) zu verbinden, so dass die T-Nutseite (6) der Schiene (11) gegen eine erste Seite (9) der Baluster (3) gedrückt wird, wobei jede der mindestens zwei Befestigungsvorrichtungen (8) Bolzenmittel (10) umfasst, die einen Stiftteil (12) und einen Kopfteil (13) einschließen, wobei der Kopfteil (13) an einem Ende des Stiftteils (12) angeordnet ist, wobei der Kopfteil (13) in der mindestens einen T-Nut (7) angeordnet ist und der Stiftteil (12) sich durch eine Öffnung (14) in dem Baluster (3) erstreckt, wobei die Befestigungsvorrichtung (8) ferner einen Kragen (15) umfasst, der den Stiftteil (12) auf einer zweiten Seite (17) der Baluster (3) umgibt, wobei die erste Seite (9) der zweiten Seite (17) gegenüberliegt, wobei der Kragen (15) mit dem Stiftteil (12) mittels einer Pressverbindung (18) verbunden ist und
wobei die zwei oder mehr Baluster (3), die mindestens eine Schiene (11) und die mindestens zwei Befestigungsvorrichtungen (8) aus Aluminium hergestellt sind.

2. Geländersystem (1) nach Anspruch 1, wobei die mindestens eine T-Nut (7) in einer ersten Schienenlängsseite (19) der zwei oder mehr Schienenlängsseiten (5) angeordnet ist und wobei eine zusätzliche T-Nut (20) in einer zweiten Schienenlängsseite (21) der zwei oder mehr Schienenlängsseiten (5) angeordnet ist.

3. Geländersystem (1) nach Anspruch 2, wobei die erste Schienenlängsseite (19) an die zweite Schienenlängsseite (21) angrenzt.

4. Geländersystem (1) nach einem der vorstehenden Ansprüche, wobei der Stiftteil (12) zylindrisch ist und wobei eine zylindrische Oberfläche (23) des Stiftteils (12) eine Anzahl von Vertiefungen (24) umfasst.

5. Geländersystem (1) nach Anspruch 4, wobei die Vertiefungen (24) zwischen einer Anzahl radialer, kreisförmiger Ausbuchtungen entlang der Längserstreckung des Stiftteils (12) ausgebildet sind.

6. Geländersystem (1) nach einem der vorstehenden Ansprüche, wobei die Verbindungsmittel (4) an einem ersten Balusterlängsende (25) jedes der zwei oder mehr Baluster (3) angeordnet sind.

7. Geländersystem (1) nach Anspruch 6, wobei die mindestens eine Schiene (11) einen Handlauf (26) umfasst, der an einem zweiten Balusterlängsende (27) der zwei oder mehr Baluster (3) angeordnet ist, wobei das zweite Balusterlängsende (27) dem ersten Balusterlängsende (25) gegenüberliegt, wobei das Geländersystem (1) ferner eine Mittelschiene (28) umfasst, die mit den zwei oder mehr Balustern (3) zwischen den Verbindungsmitteln (4) und dem Handlauf (26) mittels mindestens zwei Befestigungsvorrichtungen (8) der mindestens zwei Befestigungsvorrichtungen (8) verbunden ist.

8. Geländersystem (1) nach Anspruch 7, wobei das Geländersystem (1) ferner umfasst:
eine erste Endabdeckung (29), die die ersten Schienenlängsenden (30) des Handlaufs (26) und der Mittelschiene (28) abdeckt, wobei die erste Endabdeckung (29) sich auch zwischen den ersten Schienenlängsenden (30) des Handlaufs (26) und der Mittelschiene (28) erstreckt, und
eine zweite Endabdeckung (31), die die zweiten Schienenlängsenden (32) des Handlaufs (26) und der Mittelschiene (28) abdeckt, wobei die zweite Endabdeckung (31) sich auch zwischen den zweiten Schienenlängsenden (32) des Handlaufs (26) und der Mittelschiene (28) erstreckt.

9. Geländersystem (1) nach einem der vorstehenden Ansprüche, wobei die mindestens eine Schiene (11) mit den zwei oder mehr Balustern (3) verbunden ist, so dass die Längserstreckung der mindestens einen Schiene (11) im Wesentlichen senkrecht zu der Längserstreckung der zwei oder mehr Baluster (3) ist.

10. Geländersystem (1) nach einem der vorstehenden Ansprüche, wobei die Pressverbindung (18) den Kragen (15) und den Stiftteil (12) umfasst, die eine Verriegelungsgeometrie aufweisen, die den Kragen (15) und den Stiftteil (12) gegen eine Verschiebung in der Längsrichtung des Stiftteils (12) verriegelt.

11. Verfahren zum Montieren eines Geländersystems (1) nach einem der vorstehenden Ansprüche an einer Offshore-Anlage (2), wobei das Verfahren die Schritte umfasst zum:
• Verbinden von zwei oder mehr Aluminiumbalustern (3) mit der Offshore-Anlage (2),
• Platzieren eines Kopfteils (13) eines ersten Aluminiumbolzenmittels (10) und eines zweiten Aluminiumbolzenmittels (10) in einer T-Nut (7), die in einer T-Nutseite (6) einer Aluminiumschiene (11) angeordnet ist, wobei die Schiene (11) zwei oder mehr Schienenlängsseiten (5) umfasst, von denen eine die T-Nutseite (6) ist, wobei jedes des ersten und des zweiten Bolzenmittels (10) einen Stiftteil (12) und einen Kopfteil (13) umfasst, wobei der Kopfteil (13) an einem Ende des Stiftteils (12) angeordnet ist,
• Platzieren der T-Nut-Seite (6) der Schiene (11) gegen eine erste Seite (9) der Baluster (3), so dass der Stiftteil (12) des ersten Bolzenmittels (10) sich durch eine Öffnung (14) in einem ersten Baluster der zwei oder mehr Baluster (3) erstreckt und so dass der Stiftteil (12) des zweiten Bolzenmittels (10) sich durch eine Öffnung (14) in einem zweiten Baluster der zwei oder mehr Baluster (3) erstreckt,
• Platzieren eines ersten Kragens (15) an dem Stiftteil (12) des ersten Bolzenmittels (10) an einer zweiten Seite (17) des ersten Balusters, so dass der erste Kragen (15) den Stiftteil (12) des ersten Bolzenmittels (10) umgibt, und Platzieren eines zweiten Kragens (15) an dem zweiten Bolzenmittel (10) an einer zweiten Seite (17) des zweiten Balusters, so dass der zweite Kragen (15) den Stiftteil (12) des zweiten Bolzenmittels (10) umgibt, wobei die erste Seite (9) der zweiten Seite (17) gegenüberliegt, und
• Verbinden des ersten Kragens (15) mit dem Stiftteil (12) des ersten Bolzenmittels (10) und Verbinden des zweiten Kragens (15) mit dem zweiten Bolzenmittel (10) mittels einer Pressverbindung (18), die durch Zusammendrücken des ersten Kragens (15) gegen den Stiftteil (12) des ersten Bolzenmittels (10) und Zusammendrücken des zweiten Kragens (15) gegen den Stiftteil (12) des zweiten Bolzenmittels (10) ausgebildet wird.

12. Verfahren nach Anspruch 11, wobei der Stiftteil (12) des ersten und des zweiten Bolzenmittels (10) in eine von der zweiten Seite (17) weg weisende Richtung gezogen wird und der erste und der zweite Kragen (15) gegen die zweite Seite (17) gedrückt werden, während die Pressverbindung (18) ausgebildet wird.

13. Verfahren nach Anspruch 11 oder 12, wobei das Zusammendrücken des ersten Kragens (15) gegen den Stiftteil (12) des ersten Bolzenmittels (10) bewirkt, dass der erste Kragen (15) sich radial in Vertiefungen (24) in dem Stiftteil (12) des ersten Bolzenmittels (10) verformt, und wobei das Zusammendrücken des zweiten Kragens (15) gegen den Stiftteil (12) des zweiten Bolzenmittels (10) bewirkt, dass der zweite Kragen (15) sich radial in Vertiefungen (24) in dem Stiftteil (12) des zweiten Bolzenmittels (10) verformt.

14. Verfahren nach einem der Ansprüche 11 bis 13, wobei das Verfahren ferner das Verschieben des ersten und des zweiten Bolzenmittels (10) in Positionen in der T-Nut (7) umfasst, in denen der Abstand zwischen dem ersten und dem zweiten Bolzenmittel (10) der gleiche wie der Abstand zwischen dem ersten und dem zweiten Baluster der zwei oder mehr Baluster (3) ist, nachdem der Kopfteil (13) des ersten und des zweiten Aluminiumbolzenmittels (10) in der T-Nut (7) platziert wurde.

15. Verwendung eines Geländersystems (1) nach einem der Ansprüche 1 bis 10 an einem Übergangsstück (33), das zwischen einem Fundament (34) und einem Turm (35) einer Offshore-Windkraftanlage (36) angeordnet ist.

## Revendications

1. Système de garde-corps (1) destiné à une installation en mer (2), ledit système de garde-corps (1) comprend
deux balustres (3) ou plus comprenant des moyens de liaison (4) permettant de relier lesdits balustres (3) à ladite installation en mer (2),
au moins un rail (11) comprenant deux côtés longitudinaux de rail (5) ou plus, dans lequel au moins l'un desdits deux côtés longitudinaux de rail (5) ou plus est un côté à encoche en T (6) comprenant au moins une encoche en T (7),
au moins deux dispositifs de fixation (8) agencés pour relier ledit au moins un rail (11) auxdits deux balustres (3) ou plus de sorte que ledit côté à encoche en T (6) dudit rail (11) est forcé contre un premier côté (9) desdits balustres (3), dans lequel chacun desdits au moins deux dispositifs de fixation (8) comprend un boulonnage (10) comportant une partie tige (12) et une partie tête (13), dans lequel ladite partie tête (13) est agencée au niveau d'une extrémité de ladite partie tige (12), dans lequel ladite partie tête (13) est agencée dans ladite au moins une encoche en T (7) et ladite partie tige (12) s'étend à travers un orifice (14) dans ledit balustre (3), dans lequel ledit dispositif de fixation (8) comprend en outre un collier (15) encerclant ladite partie tige (12) sur un second côté (17) desdits balustres (3), dans lequel ledit premier côté (9) est opposé audit second côté (17), dans lequel ledit collier (15) est relié à ladite partie tige (12) au moyen d'un raccord de compression (18), et
dans lequel lesdits deux balustres (3) ou plus, ledit au moins un rail (11) et lesdits au moins deux dispositifs de fixation (8) sont fabriqués en aluminium.

2. Système de garde-corps (1) selon la revendication 1, dans lequel ladite au moins une encoche en T (7) est agencée dans un premier côté longitudinal de rail (19) desdits deux côtés longitudinaux de rail (5) ou plus et dans lequel une encoche en T supplémentaire (20) est agencée dans un second côté longitudinal de rail (21) desdits deux côtés longitudinaux de rail (5) ou plus.

3. Système de garde-corps (1) selon la revendication 2, dans lequel ledit premier côté longitudinal de rail (19) est voisin dudit second côté longitudinal de rail (21).

4. Système de garde-corps (1) selon l'une quelconque des revendications précédentes, dans lequel ladite partie tige (12) est cylindrique et dans lequel une surface cylindrique (23) de ladite partie tige (12) comprend un certain nombre d'indentations (24).

5. Système de garde-corps (1) selon la revendication 4, dans lequel lesdites indentations (24) sont formées entre un certain nombre de saillies circulaires radiales le long de l'étendue longitudinale de ladite partie tige (12).

6. Système de garde-corps (1) selon l'une quelconque des revendications précédentes, dans lequel lesdits moyens de liaison (4) sont agencés au niveau d'une première extrémité longitudinale de balustre (25) de chacun desdits deux balustres (3) ou plus.

7. Système de garde-corps (1) selon la revendication 6, dans lequel ledit au moins un rail (11) comprend un rail de rambarde (26) agencé au niveau d'une seconde extrémité longitudinale de balustre (27) desdits deux balustres (3) ou plus, dans lequel ladite seconde extrémité longitudinale de balustre (27) est opposée à ladite première extrémité longitudinale de balustre (25), dans lequel ledit système de garde-corps (1) comprend en outre un rail intermédiaire (28) relié auxdits deux balustres (3) ou plus entre lesdits moyens de liaison (4) et ledit rail de rambarde (26) au moyen d'au moins deux dispositifs de fixation (8) desdits au moins deux dispositifs de fixation (8).

8. Système de garde-corps (1) selon la revendication 7, dans lequel ledit système de garde-corps (1) comprend en outre
une première couverture d'extrémité (29) couvrant les premières extrémités longitudinales de rail (30) dudit rail de rambarde (26) et dudit rail intermédiaire (28), dans lequel ladite première couverture d'extrémité (29) s'étend également entre lesdites premières extrémités longitudinales de rail (30) dudit rail de rambarde (26) et dudit rail intermédiaire (28), et
une seconde couverture d'extrémité (31) couvrant les secondes extrémités longitudinales de rail (32) dudit rail de rambarde (26) et dudit rail intermédiaire (28), dans lequel ladite seconde couverture d'extrémité (31) s'étend également entre lesdites secondes extrémités longitudinales de rail (32) dudit rail de rambarde (26) et dudit rail intermédiaire (28).

9. Système de garde-corps (1) selon l'une quelconque des revendications précédentes, dans lequel ledit au moins un rail (11) est relié auxdits deux balustres (3) ou plus de sorte que l'étendue longitudinale dudit au moins un rail (11) est sensiblement perpendiculaire à l'étendue longitudinale desdits deux balustres (3) ou plus.

10. Système de garde-corps (1) selon l'une quelconque des revendications précédentes, dans lequel ledit raccord de compression (18) comprend ledit collier (15) et ladite partie tige (12) ayant une géométrie de verrouillage verrouillant ledit collier (15) et ladite partie tige (12) vis-à-vis d'un déplacement dans la direction longitudinale de ladite partie tige (12).

11. Procédé permettant d'assembler un système de garde-corps (1) selon l'une quelconque des revendications précédentes sur une installation en mer (2), ledit procédé comprenant les étapes consistant à :
• relier deux balustres (3) en aluminium ou plus à ladite installation en mer (2),
• placer une partie tête (13) d'un premier boulonnage (10) en aluminium et d'un second boulonnage (10) en aluminium dans une encoche en T (7) agencée dans un côté à encoche en T (6) d'un rail (11) en aluminium, dans lequel ledit rail (11) comprend deux côtés longitudinaux de rail (5) ou plus dont l'un est ledit côté à encoche en T (6), dans lequel chacun desdits premier et second boulonnages (10) comprend une partie tige (12) et une partie tête (13), dans lequel ladite partie tête (13) est agencée au niveau d'une extrémité de ladite partie tige (12),
• placer ledit côté à encoche en T (6) dudit rail (11) contre un premier côté (9) desdits balustres (3) de sorte que ladite partie tige (12) dudit premier boulonnage (10) s'étend à travers un orifice (14) dans un premier balustre desdits deux balustres (3) ou plus et de sorte que ladite partie tige (12) dudit second boulonnage (10) s'étend à travers un orifice (14) dans un second balustre desdits deux balustres (3) ou plus,
• placer un premier collier (15) sur ladite partie tige (12) dudit premier boulonnage (10) sur un second côté (17) dudit premier balustre de sorte que ledit premier collier (15) encercle ladite partie tige (12) dudit premier boulonnage (10) et placer un second collier (15) sur ledit second boulonnage (10) sur un second côté (17) dudit second balustre de sorte que ledit second collier (15) encercle ladite partie tige (12) dudit second boulonnage (10), dans lequel ledit premier côté (9) est opposé audit second côté (17), et
• relier ledit premier collier (15) à ladite partie tige (12) dudit premier boulonnage (10) et relier ledit second collier (15) audit second boulonnage (10) au moyen d'un raccord de compression (18) formé en pressant ledit premier collier (15) contre ladite partie tige (12) dudit premier boulonnage (10) et en pressant ledit second collier (15) contre ladite partie tige (12) dudit second boulonnage (10).

12. Procédé selon la revendication 11, dans lequel ladite partie tige (12) desdits premier et second boulonnages (10) est tirée dans une direction à l'écart dudit second côté (17) et lesdits premier et second colliers (15) sont poussés contre ledit second côté (17) alors que ledit raccord de compression (18) est formé.

13. Procédé selon la revendication 11 ou 12, dans lequel un pressage dudit premier collier (15) contre ladite partie tige (12) dudit premier boulonnage (10) amène ledit premier collier (15) à se déformer radialement en indentations (24) dans ladite partie tige (12) dudit premier boulonnage (10) et dans lequel un pressage dudit second collier (15) contre ladite partie tige (12) dudit second boulonnage (10) amène ledit second collier (15) à se déformer radialement en indentations (24) dans ladite partie tige (12) dudit second boulonnage (10).

14. Procédé selon l'une quelconque des revendications 11 à 13, dans lequel ledit procédé comprend en outre un coulissement desdits premier et second boulonnages (10) à des positions dans ladite encoche en T (7) où la distance entre lesdits premier et second boulonnages (10) est identique à la distance entre lesdits premier et second balustres desdits deux balustres (3) ou plus après mise en place de ladite partie tête (13) des premier et second boulonnages (10) en aluminium dans ladite encoche en T (7).

15. Utilisation d'un système de garde-corps (1) selon l'une quelconque des revendications 1 à 10 sur une pièce de transition (33) agencée entre une fondation (34) et un mât (35) d'une éolienne en mer (36).
